# EUROPEAN PATENT SPECIFICATION

(11) **EP 3 874 145 B1**
(45) Date of publication and mention of the grant of the patent: **17.05.2023**
(21) Application number: 18807169.0
(22) Date of filing: 01.11.2018
(51) Int. Cl.: F03D 1/06

(54) **WIND TURBINE ROTOR BLADE JOINT CONSTRUCTED OF DISSIMILAR MATERIALS**
WINDTURBINENROTORBLATTVERBINDUNG AUS UNTERSCHIEDLICHEN MATERIALIEN
JOINT DE PALE DE ROTOR D'ÉOLIENNE CONSTRUIT À PARTIR DE MATÉRIAUX DISSEMBLABLES

(43) Date of publication of application: 08.09.2021
(73) Proprietor: General Electric Company, Schenectady, NY 12345 (US)
(72) Inventor: RIAHI, Amir, Greenville, South Carolina 29615 (US); RODWELL, Andrew Mitchell, Greenville, South Carolina 29615 (US)
(74) Representative: COPA Copenhagen Patents
(86) International application number: PCT/US2018/058680
(87) International publication number: WO 2020/091786

(56) References cited:
- US-A- 4 412 784
- US-A1- 2010 084 079
- US-A1- 2013 087 380
- US-A1- 2013 243 601
- US-A1- 2017 268 482

## Description

### FIELD

The present disclosure relates generally to wind turbines, and more particularly to wind turbine rotor blade joints constructed of dissimilar materials with adapted coefficients of thermal expansion.

### BACKGROUND

Wind power is considered one of the cleanest, most environmentally friendly energy sources presently available, and wind turbines have gained increased attention in this regard. A modem wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

The rotor blades generally include a suction side shell and a pressure side shell typically formed using molding processes that are bonded together at bond lines along the leading and trailing edges of the blade. Further, the pressure and suction shells are relatively lightweight and have structural properties (e.g., stiffness, buckling resistance and strength) which are not configured to withstand the bending moments and other loads exerted on the rotor blade during operation. Thus, to increase the stiffness, buckling resistance and strength of the rotor blade, the body shell is typically reinforced using one or more structural components (e.g. opposing spar caps with a shear web configured therebetween) that engage the inner pressure and suction side surfaces of the shell halves. The spar caps and/or shear web may be constructed of various materials, including but not limited to glass fiber laminate composites and/or carbon fiber laminate composites.

In addition, as wind turbines continue to increase in size, the rotor blades also continue to increase in size. As such, modern rotor blades may be constructed in segments that are joined together at one or more joints. Further, certain jointed rotor blades may utilize pins at the joints to transfer the loads from the blade tip to the blade root. Moreover, the reactions from the pins are transferred to various bearing blocks at the joint locations via one or more bushings. Oftentimes, the bearing blocks may be constructed of polymer composites, whereas bushings within the bearing blocks that receive the pins are generally constructed of metal.

In certain instances, the rotor blades of the wind turbines need to be designed to withstand a wide range of temperatures, e.g. from about -40 degrees Celsius (°C) to about 60°C. In such instances, the dissimilar materials in the rotor blade joints can cause thermally-induced stresses and/or problems maintaining required clearances between components. More specifically, the different coefficients of thermal of expansion between the dissimilar materials may compromise the structural integrity of the joint. A segmented rotor blade for a wind turbine is disclosed in US 2017/268482 A1.

Accordingly, the present disclosure is directed to methods for joining dissimilar materials in a rotor blade that addresses the aforementioned issues.

### BRIEF DESCRIPTION

Aspects and advantages of the invention will be set forth in part in the following description, or may be obvious from the description.

In one aspect, the present disclosure is directed to a rotor blade for a wind turbine. The rotor blade includes a first blade segment and a second blade segment extending in opposite directions from a chord-wise joint. Each of the first and second blade segments includes at least one shell member defining an airfoil surface. The rotor blade also includes one or more pin joints for connecting the first and second blade segments at the chord-wise joint. The pin joint(s) includes one or more pin joint tubes received within pin joint slot(s). Further, the pin joint slot(s) are secured within a load bearing block. Moreover, the pin joint slot(s) are constructed of a first material having a first coefficient of thermal expansion, whereas the load bearing block is constructed of a second material having a second coefficient of thermal expansion. In addition, the first and second coefficients of thermal expansion are equal or within plus or minus 20% so as to maintain contact (such as e.g. an interference fit) between the one or more pin joint slots and the load bearing block during operational temperature changes of the wind turbine.

In one embodiment, the first material may be a metal material and the second material may be a composite material. In another embodiment, the pin joint slot(s) may be bushings. In yet another embodiment, the operational temperature changes of the wind turbine may include temperature changes ranging from about -40 degrees Celsius (°C) to about 60°C.

In further embodiments, the composite material may include a thermoset resin or a thermoplastic resin. In addition, the composite material may optionally be reinforced with one or more fiber materials to achieve a predetermined fiber content. For example, in such embodiments, the predetermined fiber content may be greater than about 55%, such as from about 56% to about 60%. In another embodiment, the fiber material(s) may include, for example, glass fibers, carbon fibers, polymer fibers, wood fibers, bamboo fibers, ceramic fibers, nanofibers, metal fibers, or combinations thereof. In additional embodiments, the metal material may include steel, aluminum, or titanium.

In another aspect, the present disclosure is directed to a method for manufacturing a joint assembly of a rotor blade of a wind turbine. The method includes forming one or more pin joint slots of a first material having a first coefficient of thermal expansion. The method also includes forming at least one load bearing block of a second material such that a second coefficient of thermal expansion of the load bearing block is equal to or within plus or minus 20% of the first coefficient of thermal expansion so as to maintain contact between the pin joint slot(s) and the load bearing block during operational temperature changes of the wind turbine. Further, the load bearing block having one or more openings. In addition, the method includes placing the one or more pin joint slots within the opening(s) of the load bearing block of the first blade segment and/or the second blade segment.

In one embodiment, forming the load bearing block of the composite material to have the second coefficient of thermal expansion may include reinforcing the composite material with a fiber and/or resin content that will either increase or decrease an original coefficient of thermal expansion of the composite material by a predetermined percentage. It should be understood that the method may further include any of the additional steps and/or features as described herein.

In yet another aspect, the present disclosure is directed to a non-claimed bearing block assembly. The bearing block assembly includes a bearing block that defines one or more openings. The bearing block assembly also includes one or more pin joint slots received within the one or more openings of the bearing block. The pin joint slot(s) are constructed of a metal material having a first coefficient of thermal expansion, whereas the bearing block constructed of a composite material having a second coefficient of thermal expansion. The first and second coefficients of thermal expansion are substantially equal so as to maintain contact between the one or more pin joint slots and the bearing block during operational temperature changes of the bearing block assembly. It should be understood that the bearing block may further include any of the additional features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the invention,

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a plan view of one embodiment of a rotor blade having a first blade segment and a second blade segment according to the present disclosure;
FIG. 3 illustrates a perspective view of a section of one embodiment of the first blade segment according to the present disclosure;
FIG. 4 illustrates a perspective view of one embodiment of a section of the second blade segment at the chord-wise joint according to the present disclosure;
FIG. 5 illustrates an assembly of one embodiment of the rotor blade of the wind turbine having the first blade segment joined with the second blade segment according to the present disclosure;
FIG. 6 illustrates an exploded perspective view of one embodiment of the multiple supporting structures of the assembly of the rotor blade of the wind turbine according to the present disclosure;
FIG. 7 illustrates a cross-sectional view of one embodiment of a bearing block of a rotor blade of a wind turbine at a chord-wise joint according to the present disclosure;
FIG. 8 illustrates a perspective view of one embodiment of a pin joint slot of a bearing block of a rotor blade of a wind turbine at a chord-wise joint according to the present disclosure;
FIG. 9 illustrates a perspective view of another embodiment of a bearing block of a rotor blade of a wind turbine at a chord-wise joint according to the present disclosure; and
FIG. 10 illustrates a flow chart of one embodiment of a method for manufacturing a bearing block assembly of a jointed rotor blade of a wind turbine according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention which is defined by the appended claims. For instance, features illustrated or described as part of one embodiment can be used with another embodiment to yield a still further embodiment. Thus, it is intended that the present invention covers such modifications and variations as come within the scope of the appended claims.

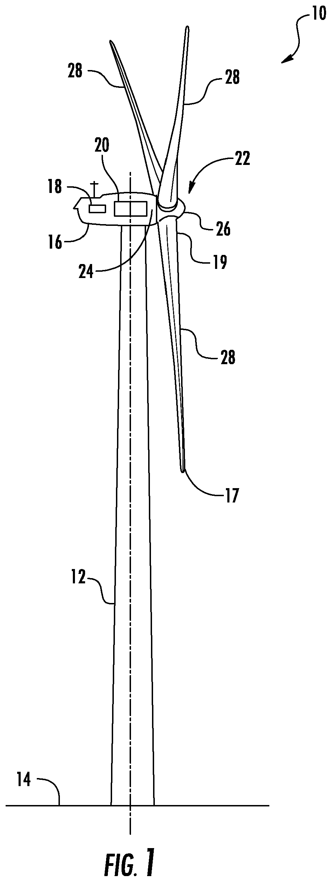

Referring now to the drawings, FIG. 1 illustrates a perspective view of one embodiment of a wind turbine 10 according to the present invention. In the illustrated embodiment, the wind turbine 10 is a horizontal-axis wind turbine. Alternatively, the wind turbine 10 may be a vertical-axis wind turbine. In addition, as shown, the wind turbine 10 may include a tower 12 that extends from a support surface 14, a nacelle 16 mounted on the tower 12, a generator 18 positioned within the nacelle 16, a gearbox 20 coupled to the generator 18, and a rotor 22 that is rotationally coupled to the gearbox 20 with a rotor shaft 24. Further, as shown, the rotor 22 includes a rotatable hub 26 and at least one rotor blade 28 coupled to and extending outward from the rotatable hub 26. As shown, the rotor blade 28 includes a blade tip 17 and a blade root 19.

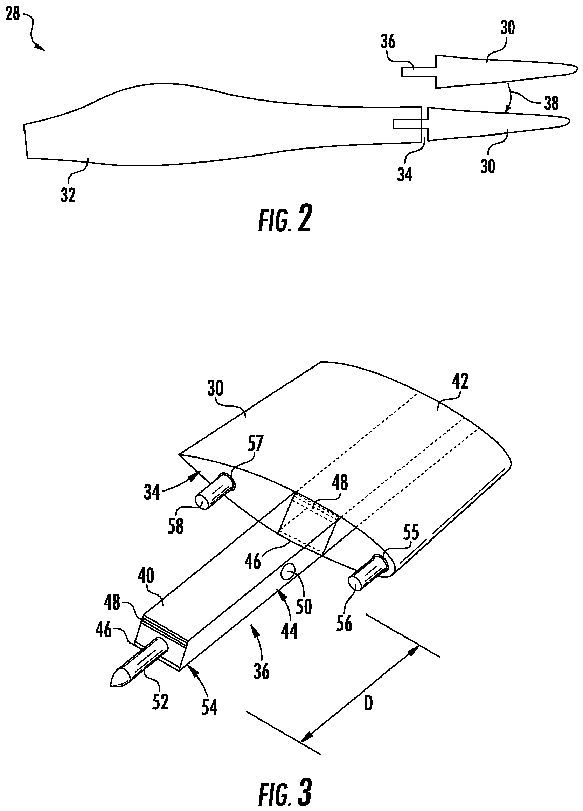

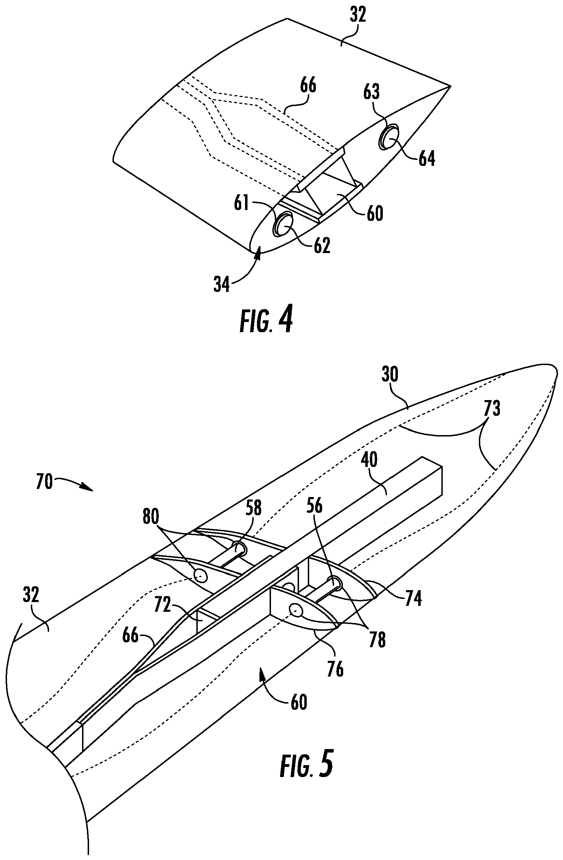

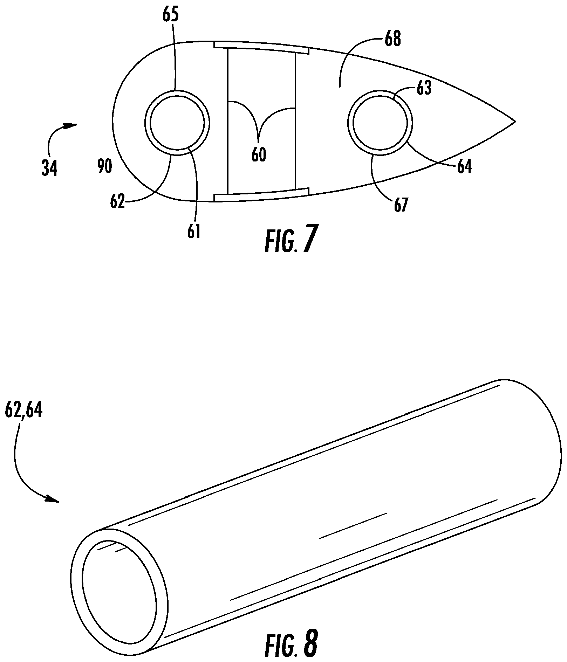

Referring now to FIG. 2, a plan view of one of the rotor blades 28 of FIG. 1 is illustrated. As shown, the rotor blade 28 may include a first blade segment 30 and a second blade segment 32. Further, as shown, the first blade segment 30 and the second blade segment 32 may each extend in opposite directions from a chord-wise joint 34. In addition, as shown, each of the blade segments 30, 32 may include at least one shell member defining an airfoil surface. The first blade segment 30 and the second blade segment 32 are connected by at least an internal support structure 36 extending into both blade segments 30, 32 to facilitate joining of the blade segments 30, 32. The arrow 38 shows that the segmented rotor blade 28 in the illustrated example includes two blade segments 30, 32 and that these blade segments 30, 32 are joined by inserting the internal support structure 36 into the second blade segment 32. In addition, as shown, the second blade segment includes multiple spar structures 66 (also referred to herein as spar caps) that extend lengthwise for connecting with a blade root section 35 of the rotor blade 28 (which is shown in more detail in FIG. 7) and with the beam structure 40 of the first blade segment 30 (which is shown in more detail in FIG. 5).

Referring now to FIG. 3, a perspective view of a section of the first blade segment 30 according to the present disclosure is illustrated. As shown, the first blade segment 30 includes a beam structure 40 that forms a portion of the internal support structure 36 and extends lengthwise for structurally connecting with the second blade segment 32. Further, as shown, the beam structure 40 forms a part of the first blade segment 30 having an extension protruding from a spar section 42, thereby forming an extending spar section. The beam structure 40 includes a shear web 44 connected with a suction side spar cap 46 and a pressure side spar cap 48.

Moreover, as shown, the first blade segment 30 may include one or more first pin joints towards a first end 54 of the beam structure 40. In one embodiment, the pin joint may include a pin that is in a tight interference fit with a bush. More specifically, as shown, the pin joint(s) may include at least one pin tube 52 located on the beam structure 40. Thus, as shown, the pin tube 52 may be oriented in a span-wise direction. It should be understood that the pin tubes described herein may include any suitable pin, bolt, fastener, or similar.

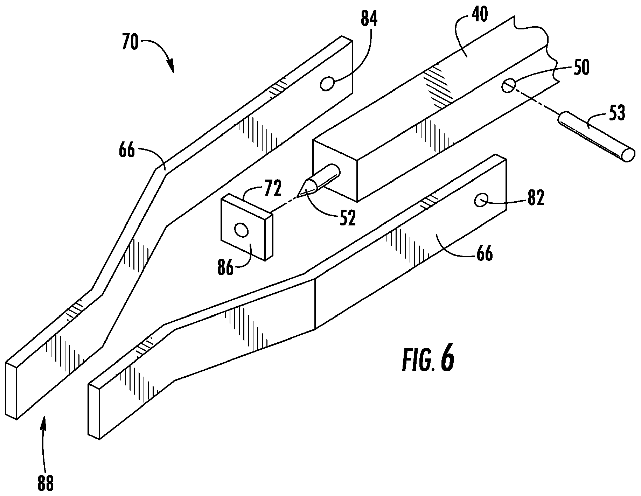

Further, the first blade segment 30 may also include a pin joint slot 50 located on the beam structure 40 proximate to the chord-wise joint 34. Moreover, as shown, the pin joint slot 50 may be oriented in a chord-wise direction. In one example, there may be a bushing within the pin joint slot 50 arranged in a tight interference fit with a pin tube or pin (shown as pin 53 in FIG. 6). Further, the first blade segment 30 may include multiple second pin joint tubes 56, 58 located at the chord-wise joint 34. Thus, as shown, the second pin joint tubes 56, 58 may include a leading edge pin joint tube 56 and a trailing edge pin joint tube 58. Further, each of the second pin joint tubes 56, 58 may be oriented in a span-wise direction. In addition, as shown, each of the second pin joint tubes 56, 58 may include multiple flanges 55, 57, respectively, that are configured to distribute compression loads at the chord-wise joint 34.

It is to be noted that the pin tube 52 located at the first end of the beam structure 40 may be separated span-wise with the multiple second pin joint tubes 56, 58 located at the chord-wise joint 34 by an optimal distance D. This optimal distance D may be such that the chord-wise joint 34 is able to withstand substantial bending moments caused due to shear loads acting on the chord-wise joint 34. In another embodiment, each of the pin joints connecting the first and second blade segments 30, 32 may include an interference-fit steel bushed joint.

Referring now to FIG. 4, a perspective view of a section of the second blade segment 32 at the chord-wise joint 34 according to the present disclosure is illustrated. As shown, the second blade segment 32 includes a receiving section 60 extending lengthwise within the second blade segment 32 for receiving the beam structure 40 of the first blade segment 30. The receiving section 60 includes the spar structures 66 that extend lengthwise for connecting with the beam structure 40 of the first blade segment 30. As shown, the second blade segment 32 may further include pin joint slots 62, 64 for receiving pin tubes 56, 58 (shown in FIG. 3) of the first blade segment 30 and forming tight interference fittings. In one example, each of the multiple pin joint slots 62, 64 may include multiple flanges 61, 63, respectively, that are configured to distribute compression loads at the chord-wise joint 34.

Referring now to FIG. 5, an assembly 70 of the rotor blade 28 having the first blade segment 30 joined with the second blade segment 32 according to the present disclosure is illustrated. As shown, the assembly 70 illustrates multiple supporting structures beneath outer shell members of the rotor blade 28 having the first blade segment 30 joined with the second blade segment 32. Further, as shown, the receiving section 60 includes the multiple spar structures 66 extending lengthwise and supports the beam structure 40. The receiving section 60 also includes a rectangular fastening element 72 that connects with the pin tube 52 of the beam structure 40 in the span-wise direction. Further, the first and the second blade segments 30, 32 may also include chord-wise members 74, 76 respectively at the chord-wise joint 34. Further, as shown, the chord-wise members 74, 76 may include leading edge pin openings 78 and trailing edge pin openings 80 that allows pin joint connections between the first and second blade segments 30, 32. For example, as shown, the chord-wise members 74, 76 are connected by pin tubes 56 and 58 that are in tight interference fit with bushings located in the leading edge pin openings 78 and the trailing edge pin openings 80. In another embodiment, each of the spar structures 66, the rectangular fastening element 72, and the chord-wise members 74, 76 may be constructed of glass reinforced fibers. In this example, the assembly 70 may also include multiple lightening receptor cables 73 that are embedded between the multiple pin tubes or pins 56, 58 and the bushing connections attached to the chord-wise members 74, 76.

Referring now to FIG. 6, an exploded perspective view of the multiple supporting structures of the assembly 70 towards the receiving section 60 of the rotor blade 28 is illustrated. As shown, a pair of spar structures 66 is configured to receive the beam structure 40 and includes pin joint slots 82, 84 that are aligned with the pin joint slot 50 of the beam structure 40 through which a pin tube or pin 53 may be inserted. Further, the pin 53 is configured to remain in a tight interference fit within the aligning pin joint slots 82, 50, 84 such that spar structures 66 and the beam structure 40 are joined together by during assembling. Further, FIG. 6 also illustrates the rectangular fastening element 72 that includes a pin joint slot 86 configured for receiving the pin tube 52 of the beam structure 40. As such, the pin tube 52 is configured to form a tight interference fit pined joint. Further, the pair of spar structures 66 may be joined together at one end 88 using any suitable adhesive material or an elastomeric seal.

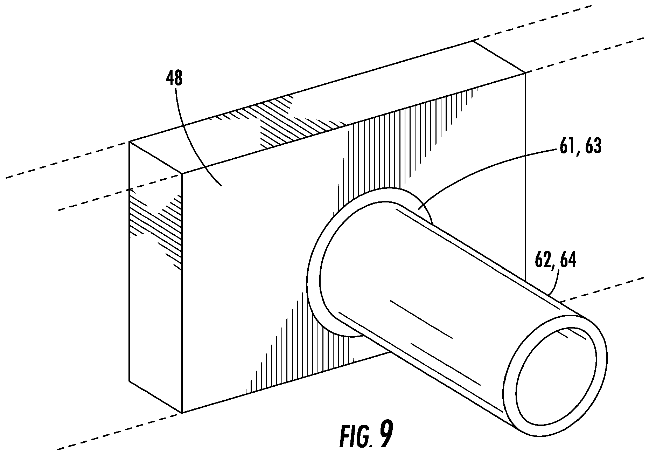

Referring to FIGS. 7 and 9, the pin joint slot(s) 62, 64 may be installed and retained within one or more openings 65, 67 of a bearing block 68 (similar to or synonymous with the chord-wise members 74, 76). In one embodiment, as shown in FIGS. 8 and 9, the pin joint slot(s) 62, 64 described herein may include one or more bushings. As such, in certain embodiments, the bushings 62, 64 may be constructed of a metal material having a first coefficient of thermal expansion. In contrast, the bearing block 68 may be constructed of a composite material having a second coefficient of thermal expansion. In conventional bearing blocks, however, the coefficients of thermal expansion of the metal and composite materials would be substantially different, thereby causing thermally-induced stresses between the pin joint slot(s) 62, 64 and the bearing block 68. In addition, in such situations, the different coefficients of thermal of expansion between the dissimilar materials may compromise the structural integrity of the joint.

In the present disclosure, however, the first and second coefficients of thermal expansion of the dissimilar materials are equal or within plus or minus 20% so as to maintain contact between the pin joint slot(s) 62, 64 and the bearing block 68 during operational temperature changes of the wind turbine 10. In other words, the bearing block 68 of the present disclosure may be custom designed for the operational temperature of the wind turbine 10 to avoid the aforementioned issues. In one embodiment, the operational temperature changes of the wind turbine 10 may include temperature changes ranging from about - 40 degrees Celsius (°C) to about 60°C. Thus, the bearing block 68 may be designed to withstand the entire ranges of potential temperatures.

For example, in one embodiment, the composite material of the bearing block 68 may include a thermoset resin or a thermoplastic resin. In addition, the composite material of the bearing block 68 may optionally be reinforced with one or more fiber materials to achieve a predetermined fiber content. For example, in such embodiments, the predetermined fiber content may be greater than about 55%, such as from about 56% to about 60%. Thus, by increasing the fiber content of the composite material, the coefficient of thermal expansion of the composite material is reduced. Accordingly, by knowing the coefficient of thermal expansion of the metal material of the pin joint slot(s) 62, 64, the materials of the bearing block 68 can be specifically chosen such that the coefficient of thermal expansion therefore substantially matches the metal.

The metal material of the bushing(s) 62, 64 described herein may include, for example, steel, aluminum, titanium, or any other suitable metal or metal alloy. The thermoplastic materials described herein may generally encompass a plastic material or polymer that is reversible in nature. For example, thermoplastic materials typically become pliable or moldable when heated to a certain temperature and returns to a more rigid state upon cooling. Further, thermoplastic materials may include amorphous thermoplastic materials and/or semi-crystalline thermoplastic materials. For example, some amorphous thermoplastic materials may generally include, but are not limited to, styrenes, vinyls, cellulosics, polyesters, acrylics, polysulphones, and/or imides. More specifically, exemplary amorphous thermoplastic materials may include polystyrene, acrylonitrile butadiene styrene (ABS), polymethyl methacrylate (PMMA), glycolised polyethylene terephthalate (PET-G), polycarbonate, polyvinyl acetate, amorphous polyamide, polyvinyl chlorides (PVC), polyvinylidene chloride, polyurethane, or any other suitable amorphous thermoplastic material. In addition, exemplary semi-crystalline thermoplastic materials may generally include, but are not limited to polyolefins, polyamides, fluropolymer, ethyl-methyl acrylate, polyesters, polycarbonates, and/or acetals. More specifically, exemplary semi-crystalline thermoplastic materials may include polybutylene terephthalate (PBT), polyethylene terephthalate (PET), polypropylene, polyphenyl sulfide, polyethylene, polyamide (nylon), polyetherketone, or any other suitable semi-crystalline thermoplastic material.

Further, the thermoset materials as described herein may generally encompass a plastic material or polymer that is non-reversible in nature. For example, thermoset materials, once cured, cannot be easily remolded or returned to a liquid state. As such, after initial forming, thermoset materials are generally resistant to heat, corrosion, and/or creep. Example thermoset materials may generally include, but are not limited to, some polyesters, some polyurethanes, esters, epoxies, or any other suitable thermoset material.

In addition, the fiber materials described herein may include but are not limited to glass fibers, carbon fibers, polymer fibers, wood fibers, bamboo fibers, ceramic fibers, nanofibers, metal fibers, or combinations thereof. In addition, the direction or orientation of the fibers may include quasi-isotropic, multi-axial, unidirectional, biaxial, triaxial, or any other another suitable direction and/or combinations thereof.

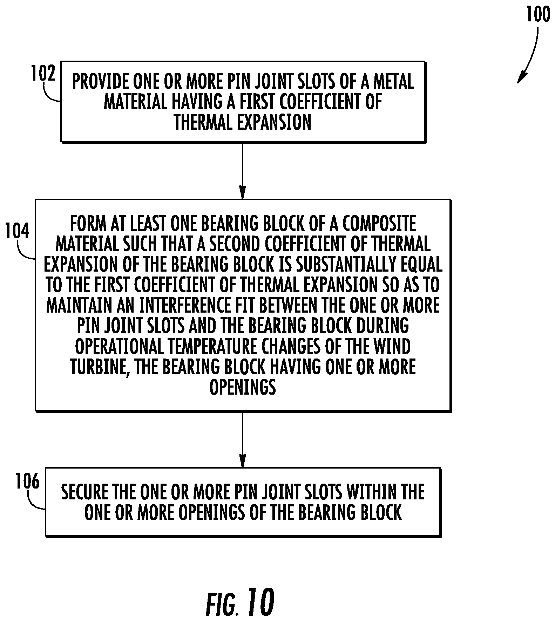

Referring now to FIG. 10, a flow chart 100 of a method for manufacturing a bearing block assembly of a jointed rotor blade of a wind turbine according to the present disclosure is illustrated. In general, the method 100 will be described herein with reference to the wind turbine 10 and the rotor blade 28 shown in FIGS. 1-9. However, it should be appreciated that the disclosed method 100 may be implemented with rotor blades having any other suitable configurations. In addition, although FIG. 10 depicts steps performed in a particular order for purposes of illustration and discussion, the methods discussed herein are not limited to any particular order or arrangement. One skilled in the art, using the disclosures provided herein, will appreciate that various steps of the methods disclosed herein can be omitted, rearranged, combined, and/or adapted in various ways without deviating from the scope of the present disclosure.

As shown at (102), the method 100 may include providing the pin joint slot(s) 62, 64 of a metal material having a first coefficient of thermal expansion. As shown at (104), the method 100 may include forming the bearing block 68 of a composite material such that a second coefficient of thermal expansion of the bearing block 68 is substantially equal to the first coefficient of thermal expansion so as to maintain contact between the pin joint slot(s) and the bearing block 68 during operational temperature changes of the wind turbine 10. Further, the bearing block 68 has one or more openings 65, 67. For example, in one embodiment, the bearing block 68 may be formed by reinforcing the composite material with a fiber content that will either increase or decrease an original coefficient of thermal expansion of the composite material by a predetermined percentage. Thus, the resulting coefficient of thermal expansion of the composite material substantially matches that of the metal material of the pin joint slot(s) 62, 64. As shown at (106), the method 100 may include securing the pin joint slot(s) 62, 64 within the openings 65, 67 of the bearing block 68.

While only certain features of the invention have been illustrated and described herein, many modifications and changes will occur to those skilled in the art.

This written description uses examples to disclose the invention, including the best mode, and also to enable any person skilled in the art to practice the invention, including making and using any devices or systems and performing any incorporated methods.

## Claims

1. A rotor blade (28) for a wind turbine (10), comprising:
a first blade segment (30) and a second blade segment (32) extending in opposite directions from a chord-wise joint (34), each of the first and second blade segments comprising at least one shell member defining an airfoil surface; and,
one or more pin joints for connecting the first and second blade segments at the chord-wise joint, the one or more pin joints comprising one or more pin joint tubes (56, 58) received within one or more pin joint slots (62, 64), the one or more pin joint slots secured within a load bearing block (68),
wherein the one or more pin joint slots are constructed of a first material having a first coefficient of thermal expansion, the load bearing block constructed of a second material having a second coefficient of thermal expansion, **characterized by**
the first and second coefficients of thermal expansion being equal or within plus or minus 20% so as to maintain contact between the one or more pin joint slots and the load bearing block during operational temperature changes of the wind turbine.

2. The rotor blade of claim 1, wherein the first material comprises a metal material and the second material comprises a composite material.

3. The rotor blade of any of the preceding claims, wherein the one or more pin joint slots comprise one or more bushings.

4. The rotor blade of any of the preceding claims, wherein the operational temperature changes of the wind turbine comprise temperature changes ranging from about -40 degrees Celsius (°C) to about 60°C.

5. The rotor blade of claim 2, claims 2 and 3, or claims 2 and 3 and 4, wherein the composite material comprises at least one of a thermoset resin or a thermoplastic resin.

6. The rotor blade of claim 2, claims 2 and 3, claims 2 and 3 and 4, or claim 5, wherein the composite material is reinforced with one or more fiber materials to achieve a predetermined fiber content.

7. The rotor blade of claim 6, wherein the predetermined fiber content is greater than about 55%.

8. The rotor blade of claim 6 or claim 7, wherein the one or more fiber materials comprising at least one of glass fibers, carbon fibers, polymer fibers, wood fibers, bamboo fibers, ceramic fibers, nanofibers, metal fibers, or combinations thereof.

9. The rotor blade of claim 2, claims 2 and 3, claims 2 and 3 and 4, claim 5, claim 6, claim 7, or claim 8, wherein the metal material comprises steel, aluminum, or titanium.

10. A method for manufacturing a load bearing block assembly of a jointed rotor blade (28) of a wind turbine (10), the method comprising:
providing one or more pin joint slots (62, 64) of a first material having a first coefficient of thermal expansion;
forming at least one load bearing block (68) of a second material such that a second coefficient of thermal expansion of the load bearing block is equal to or within plus or minus 20% of the first coefficient of thermal expansion so as to maintain contact between the one or more pin joint slots and the load bearing block during operational temperature changes of the wind turbine, the load bearing block having one or more openings; and,
securing the one or more pin joint slots within the one or more openings of the load bearing block.

11. The method of claim 10, wherein the first material comprises a metal material and the second material comprises a composite material.

12. The method of claims 10-11, wherein the one or more pin joint slots comprise one or more bushings.

13. The method of claim 11, or claims 11 and 12, wherein forming the load bearing block of the second material to have the second coefficient of thermal expansion further comprises reinforcing the second material with a fiber content that will either increase or decrease an original coefficient of thermal expansion of the composite material by a predetermined percentage.

14. The method of claim 13, wherein the fiber content is greater than about 55%.

## Patentansprüche

1. Rotorblatt (28) für eine Windkraftanlage (10), umfassend:
ein erstes Blattsegment (30) und ein zweites Blattsegment (32), die sich in entgegengesetzten Richtungen von einer in Sehnenrichtung verlaufenden Verbindung (34) erstrecken, wobei das erste und das zweite Blattsegment jeweils mindestens ein eine Tragflächenoberfläche definierendes Schalenelement umfassen; und
eine oder mehrere Zapfenverbindungen zum Verbinden des ersten und des zweiten Blattsegments an der in Sehnenrichtung verlaufenden Verbindung, wobei die eine oder die mehreren Zapfenverbindungen ein oder mehrere Zapfenverbindungsröhren (56, 58) umfassen, die in einer oder mehreren Zapfenverbindungsaufnahmen (62, 64) aufgenommen sind, wobei die eine oder die mehreren Zapfenverbindungsaufnahmen in einem lasttragenden Block (68) fixiert sind,
wobei die eine oder die mehreren Zapfenverbindungsaufnahmen aus einem ersten Material aufgebaut sind, das einen ersten Wärmeausdehnungskoeffizienten aufweist, wobei der lasttragende Block aus einem zweiten Material aufgebaut ist, das einen zweiten Wärmeausdehnungskoeffizienten aufweist, **dadurch gekennzeichnet, dass**
der erste und der zweite Wärmeausdehnungskoeffizient gleich oder innerhalb von plus oder minus 20 % sind, um den Kontakt zwischen dem einen oder den mehreren Zapfenverbindungsaufnahmen und dem lasttragenden Block während betrieblicher Temperaturänderungen der Windkraftanlage aufrechtzuerhalten.

2. Rotorblatt nach Anspruch 1, wobei das erste Material ein Metallmaterial umfasst und das zweite Material ein Verbundmaterial umfasst.

3. Rotorblatt nach einem der vorangehenden Ansprüche, wobei das eine oder die mehreren Zapfenverbindungsaufnahmen eine oder mehrere Buchsen umfassen.

4. Rotorblatt nach einem der vorangehenden Ansprüche, wobei die betrieblichen Temperaturänderungen der Windkraftanlage Temperaturänderungen im Bereich von etwa - 40 Grad Celsius (°C) bis etwa 60 °C umfassen.

5. Rotorblatt nach Anspruch 2, Ansprüchen 2 und 3 oder Ansprüchen 2 und 3 und 4, wobei das Verbundmaterial ein Duroplastharz und/oder ein Thermoplastharz umfasst.

6. Rotorblatt nach Anspruch 2, Ansprüchen 2 und 3, Ansprüchen 2 und 3 und 4 oder Anspruch 5, wobei das Verbundmaterial mit einem oder mehreren Fasermaterialien verstärkt ist, um einen vorgegebenen Fasergehalt zu erreichen.

7. Rotorblatt nach Anspruch 6, wobei der vorgegebene Fasergehalt größer als etwa 55 % ist.

8. Rotorblatt nach Anspruch 6 oder Anspruch 7, wobei das eine oder die mehreren Fasermaterialien mindestens eines von Glasfasern, Kohlenstofffasern, Polymerfasern, Holzfasern, Bambusfasern, Keramikfasern, Nanofasern, Metallfasern oder Kombinationen davon umfassen.

9. Rotorblatt nach Anspruch 2, Ansprüchen 2 und 3, Ansprüchen 2 und 3 und 4, Anspruch 5, Anspruch 6, Anspruch 7 oder Anspruch 8, wobei das Metallmaterial Stahl, Aluminium oder Titan umfasst.

10. Verfahren zum Herstellen einer lasttragenden Blockanordnung eines zusammengefügten Rotorblatts (28) einer Windkraftanlage (10), wobei das Verfahren Folgendes umfasst:
Bereitstellen einer oder mehrerer Zapfenverbindungsaufnahmen (62, 64) aus einem ersten Material, das einen ersten Wärmeausdehnungskoeffizienten aufweist;
Bilden mindestens eines lasttragenden Blocks (68) aus einem zweiten Material, sodass ein zweiter Wärmeausdehnungskoeffizient des lasttragenden Blocks gleich dem oder innerhalb von plus oder minus 20 % des ersten Wärmeausdehnungskoeffizienten ist, um den Kontakt zwischen der einen oder den mehreren Zapfenverbindungsaufnahmen und dem lasttragenden Block während betrieblicher Temperaturänderungen der Windkraftanlage aufrechtzuerhalten, wobei der lasttragende Block eine oder mehrere Öffnungen aufweist; und
Fixieren der einen oder der mehreren Zapfenverbindungsaufnahmen in der einen oder den mehreren Öffnungen des lasttragenden Blocks.

11. Verfahren nach Anspruch 10, wobei das erste Material ein Metallmaterial umfasst und das zweite Material ein Verbundmaterial umfasst.

12. Verfahren nach Ansprüchen 10-11, wobei die eine oder die mehreren Zapfenverbindungsaufnahmen eine oder mehrere Buchsen umfassen.

13. Verfahren nach Anspruch 11 oder Ansprüchen 11 und 12, wobei das Bilden des lasttragenden Blocks aus dem zweiten Material, um den zweiten Wärmeausdehnungskoeffizienten aufzuweisen, ferner das Verstärken des zweiten Material mit einem Fasergehalt umfasst, der einen ursprünglichen Wärmeausdehnungskoeffizienten des Verbundmaterials um einen vorgegebenen Prozentsatz entweder erhöht oder senkt.

14. Verfahren nach Anspruch 13, wobei der Fasergehalt größer als etwa 55 % ist.

## Revendications

1. Pale de rotor (28) pour une éolienne (10), comportant :
un premier segment de pale (30) et un deuxième segment de pale (32) s'étendant dans des directions opposées depuis un joint dans le sens de la corde (34), chacun des premier et deuxième segments de pale comportant au moins un élément formant coque définissant une surface de profil aérodynamique ; et,
un ou plusieurs joints à goupille servant à raccorder les premier et deuxième segments de pale au niveau du joint dans le sens de la corde, lesdits un ou plusieurs j oints à goupille comportant un ou plusieurs tubes de joints à goupille (56, 58) qui sont reçus à l'intérieur d'une ou de plusieurs fentes pour joint à goupille (62, 64), lesdites unes ou plusieurs fentes pour joint à goupille étant assujetties à l'intérieur d'un bloc porteur de charge (68),
dans laquelle lesdites unes ou plusieurs fentes pour joint à goupille sont construites à partir d'un premier matériau ayant un premier coefficient de dilatation thermique, le bloc porteur de charge étant construit à partir d'un deuxième matériau ayant un deuxième coefficient de dilatation thermique, **caractérisée en ce que** les premier et deuxième coefficients de dilatation thermique sont égaux ou sont égaux à plus ou moins 20 % près de manière à maintenir le contact entre lesdites unes ou plusieurs fentes pour joint à goupille et le bloc porteur de charge au cours de changements de température de fonctionnement de l'éolienne.

2. Pale de rotor selon la revendication 1, dans laquelle le premier matériau comporte un matériau métallique et le deuxième matériau comporte un matériau composite.

3. Pale de rotor selon l'une quelconque des revendications précédentes, dans laquelle lesdites unes ou plusieurs fentes pour joint à goupille comportent une ou plusieurs douilles.

4. Pale de rotor selon l'une quelconque des revendications précédentes, dans laquelle les changements de température de fonctionnement de l'éolienne comportent des changements de température se trouvant dans une plage allant d'environ -40 degrés Celsius (°C) à environ 60 °C.

5. Pale de rotor selon la revendication 2, les revendications 2 et 3, ou les revendications 2 et 3 et 4, dans laquelle le matériau composite comporte au moins un type de résine parmi une résine thermodurcie ou une résine thermoplastique.

6. Pale de rotor selon la revendication 2, les revendications 2 et 3, les revendications 2 et 3 et 4, ou la revendication 5, dans laquelle le matériau composite est renforcé par un ou plusieurs matériaux à base de fibres pour obtenir une teneur en fibres prédéterminée.

7. Pale de rotor selon la revendication 6, dans laquelle la teneur en fibres prédéterminée est supérieure à environ 55 %.

8. Pale de rotor selon la revendication 6 ou la revendication 7, dans laquelle lesdits un ou plusieurs matériaux à base de fibres comportent au moins un type de fibres parmi des fibres de verre, des fibres de carbone, des fibres polymères, des fibres de bois, des fibres de bambou, des fibres de céramique, des nanofibres, des fibres métalliques, ou des combinaisons de celles-ci.

9. Pale de rotor selon la revendication 2, les revendications 2 et 3, les revendications 2 et 3 et 4, la revendication 5, la revendication 6, la revendication 7, ou la revendication 8, dans laquelle le matériau métallique comporte de l'acier, de l'aluminium, ou du titane.

10. Procédé de fabrication d'un ensemble formant bloc porteur de charge d'une pale de rotor à joint (28) d'une éolienne (10), le procédé comportant les étapes consistant à :
mettre en oeuvre une ou plusieurs fentes pour joint à goupille (62, 64) réalisés à partir d'un premier matériau ayant un premier coefficient de dilatation thermique ;
former au moins un bloc porteur de charge (68) réalisé à partir d'un deuxième matériau de telle sorte qu'un deuxième coefficient de dilatation thermique du bloc porteur de charge est égal au premier coefficient de dilatation thermique ou y est égal à plus ou moins 20 % près de manière à maintenir le contact entre lesdites unes ou plusieurs fentes pour joint à goupille et le bloc porteur de charge au cours de changements de température de fonctionnement de l'éolienne, le bloc porteur de charge ayant une ou plusieurs ouvertures ; et,
assujettir lesdites unes ou plusieurs fentes pour joint à goupille à l'intérieur desdites une ou plusieurs ouvertures du bloc porteur de charge.

11. Procédé selon la revendication 10, dans lequel le premier matériau comporte un matériau métallique et le deuxième matériau comporte un matériau composite.

12. Procédé selon les revendications 10 et 11, dans lequel lesdites unes ou plusieurs fentes pour joint à goupille comportent une ou plusieurs douilles.

13. Procédé selon la revendication 11, ou les revendications 11 et 12, dans lequel l'étape consistant à former le bloc porteur de charge réalisé à partir du deuxième matériau pour avoir le deuxième coefficient de dilatation thermique comporte par ailleurs l'étape consistant à renforcer le deuxième matériau avec une teneur en fibres qui soit augmentera soit réduira un coefficient de dilatation thermique d'origine du matériau composite selon un pourcentage prédéterminé.

14. Procédé selon la revendication 13, dans lequel la teneur en fibres est supérieure à environ 55 %.
